# EUROPÄISCHE PATENTANMELDUNG

(11) **EP 1 134 636 A1**
(43) Veröffentlichungstag der Anmeldung: **19.09.2001**
(21) Anmeldenummer: 00250090.8
(22) Anmeldetag: 10.03.2000
(51) Int. Cl.: G05B 19/418

(54) **Editor zur Erstellung von Prozessplänen**

(71) Anmelder: Infineon Technologies AG, 81669 München (DE); Siemens Business Services GmbH & Co. OHG, 81739 München (DE)
(72) Erfinder: Aumer, Richard, 01478 Weixdorf (DE); Gröger, Wolfgang, 01109 Dresden (DE); Schneider, Winfrid, 33098 Paderborn (DE); Schmalzbauer, Klaus, 93186 Pettendorf (DE); Irsch, Bernd, 91126 Schnabach (DE); Zedlacher, Winfrid, 9300 St. Veit/Glan (AT); Neumayer, Martin, 84094 Elsendorf (DE)
(74) Vertreter: Reinhard - Skuhra - Weise & Partner

(57) **Zusammenfassung**

Die Erfindung betrifft einen Editor (1) zur Erstellung von Prozessplänen mit Speichermitteln (2) zum Speichern von verschiedenen Prozesszielen, mit Speichermitteln (3) zum Speichern von Regeln zur Bildung von Prozessplänen durch Verknüpfung von Prozesszielen über Prozessplanschritte und/oder Verzweigungen, mit Anzeigemitteln zur Anzeige von Prozesszielen, Prozessplanschritten, Verzweigungen und Prozessplänen und mit Überprüfungsmitteln (9) zur Überprüfung von Prozessplänen, wobei in Abhängigkeit der Überprüfung eine Freigabemeldung aktivierbar ist.

## Beschreibung

Die Erfindung betrifft einen Editor zur Erstellung von Prozessplänen. Derartige Prozesspläne dienen als Grundlage zur Herstellung von Produkten.

Bei der Herstellung von Produkten, beispielsweise in den Bereichen Kraftfahrzeugbau sowie Maschinen- und Anlagenbau, erfolgt die Herstellung von Produkten mittels stücklistenorientierter Fertigungsprozesse.

Die Produkte, wie zum Beispiel Kraftfahrzeuge, Maschinen oder Anlagen stellen komplexe Einheiten dar, welche jeweils aus einer vorgegebenen Anzahl von Funktionseinheiten bestehen, die wiederum aus einer hierarchischen Struktur von Komponenten bestehen, wobei schließlich in der niedrigsten Hierarchiestufe eine Komponente aus einer bestimmten Anzahl von Einzelteilen besteht, wie zum Beispiel Dreh- oder Frästeile.

Für die einzelnen Einheiten, Funktionseinheiten, Komponenten und Einzelteile existieren jeweils Stücklisten, deren Gesamtheit ein hierarchisches Stücklistensystem bildet.

Die Verwaltung derartiger Stücklisten erfolgt über kommerzielle Softwaresysteme, wie zum Beispiel PDM (Product Data Management) Softwaresysteme.

Auf der Basis derartiger Softwaresysteme erfolgt eine weitgehend automatisierte Fertigung derartiger Produkte. Die Fertigung derartiger Produkte erfolgt dabei beispielsweise mittels CIM (Computer Integrated Manufacture) Konzepten.

Im Bereich der Pharmaindustrie, der chemischen Industrie und insbesondere im Bereich der Halbleiterindustrie erfolgt eine prozessorientierte Herstellung von Produkten. Demzufolge sind in diesen Bereichen stücklistenorientierte Fertigungsmethoden und damit die darauf basierenden automatisierten Fertigungsmethoden nicht anwendbar.

Beispielsweise werden in der Halbleiterindustrie bei der Bearbeitung von Wafern eine Vielzahl von Fertigungs- und Messprozessen benötigt. Hierzu gehören insbesondere Lithographieprozesse, Ätzprozesse, Diffusionsprozesse, Abscheidungen und Implantationen, sowie diverse Messprozesse zur Kontrolle dieser Fertigungsprozesse.

Die einzelnen Fertigungs- und Messprozesse werden zwar zum Teil automatisiert in entsprechenden Fertigungs- und Messeinheiten durchgeführt. Jedoch existiert kein automatisierter Fertigungsablauf, bei welchem die in den einzelnen Fertigungs- und Messeinheiten durchgeführten Fertigungs- und Messschritte verknüpft sind. Daher müssen zur Erfassung des gesamten Fertigungsablaufs die Daten der einzelnen Fertigungseinheiten und Messeinheiten manuell zusammengeführt werden. Bei diesen Daten handelt es sich neben technischen und produktabhängigen Spezifikationen insbesondere um logistische und betriebswirtschaftliche Daten.

Dies führt nicht nur zu einer erschwerten Kontrolle des Fertigungsablaufs. Ein wesentliches Problem besteht auch darin, dass bei der Erstellung eines derartigen Fertigungsablaufs oder dessen Änderung keine ausreichende Planungssicherheit besteht. Insbesondere fehlt bei der Kombination einzelner Fertigungs- und Messschritte zu einem Fertigungsablauf die notwendige Transparenz, so dass bei der Definition derartiger Fertigungsabläufe ein unerwünscht hohes Fehlerrisiko besteht.

Der Erfindung liegt die Aufgabe zugrunde eine Einrichtung zu schaffen, mittels derer prozessorientierte Produktionsabläufe mit hoher Planungssicherheit und geringem Fehlerrisiko definierbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Erfindungsgemäß ist zur Erstellung von Prozessplänen ein Editor vorgesehen, welcher Speichermittel zum Speichern von verschiedenen Prozesszielen sowie Speichermittel zum Speichern von Regeln zur Bildung von Prozessplänen durch Verknüpfung von Prozesszielen über Prozessplanschritte und/oder Verzweigungen aufweist. Zudem sind Anzeigemittel zur Anzeige von Prozesszielen, Prozessplanschritten, Verzweigungen und Prozessplänen vorgesehen. Schließlich sind Überprüfungsmittel zur Überprüfung von Prozessplänen vorgesehen, wobei in Abhängigkeit der Überprüfung eine Freigabemeldung aktivierbar ist.

Der Grundgedanke der Erfindung besteht darin, dass ein Benutzer mittels des erfindungsgemäßen Editors, der auf einer Rechnereinheit installiert ist, einen Prozessplan für den Ablauf eines kompletten Fertigungsprozesses oder eines Teils eines solchen Fertigungsprozesses erstellen kann. Dabei sind in dem Editor in Form einer Bibliothek die für derartige Fertigungsprozesse benötigten Prozessziele abgespeichert.

Derartige Prozessziele stellen insbesondere vorgegebene Fertigungs- oder Messschritte dar, die bei einem prozessorientierten Fertigungsablauf benötigt werden. Beispielsweise kann ein derartiger Prozessplan zur Bearbeitung von Wafern in einer Halbleiterfertigungsanlage verwendet werden. Die einzelnen Prozessziele definieren dabei beispielsweise das zu erzielende Ergebnis eines Ätzprozesses, eines Photolithographieprozesses oder dergleichen. Zudem können die Prozessziele in der Spezifikation von Zielwerten von Messprozessen zur Kontrolle einzelner Fertigungsschritte bestehen. Die Prozessziele selbst sind in Form von Parametersätzen definiert, die die in den einzelnen Fertigungs- oder Messschritten zu erzielenden Ergebnisse oder Spezifikationen beschreiben.

Die einzelnen Prozessziele werden vom Benutzer über Prozessplanschritte und/oder Verzweigungen verknüpft, so dass eine logische Abfolge der Abarbeitung der einzelnen Prozessziele erhalten wird.

Im Editor sind Regeln zur Bildung von Verknüpfungen abgespeichert. Mittels der Überprüfungsmittel, die im Editor vorgesehen sind, wird der vom Benutzer erstellte Prozessplan selbsttätig überprüft. Insbesondere wird anhand der abgespeicherten Regeln überprüft, ob die Verknüpfungen der einzelnen Prozessziele regelgerecht durchgeführt werden. Vorteilhafterweise werden mittels der Überprüfungsmittel auch Konsistenzüberprüfungen eines erstellten Prozessplans durchgeführt. Schließlich weisen die einzelnen Prozessziele auch Freigabe- und Statusparameter auf, die von den Überprüfungsmitteln überprüft werden.

In Abhängigkeit der von den Überprüfungsmitteln durchgeführten Überprüfung ist eine Freigabemeldung aktivierbar. Nur bei Vorliegen einer derartigen Freigabemeldung liegt ein gültiger Prozessplan vor, der zur Fertigung von Produkten einsetzbar ist.

Die Freigabemeldung erfolgt zweckmäßigerweise nur dann, wenn die im Prozessplan durchgeführten Verknüpfungen entsprechend der im Editor abgespeicherten Regeln durchgeführt werden, wenn die Konsistenzüberprüfung im Editor erfolgreich durchgeführt worden ist und wenn die Freigabe- und Statusparameter der Prozessziele vorgegebenen Sollwerten entsprechen.

Mittels des erfindungsgemäßen Editors wird somit eine Datenbasis bereitgestellt, die eine vollständige und reproduzierbare Erstellung von Prozessplänen erlaubt, wodurch eine hohe Planungssicherheit bei der Konzeption von prozessorientierten Fertigungsabläufen erzielt wird.

Ein wesentlicher Vorteil besteht dabei darin, dass mittels der Überprüfungsmittel im Editor eine selbsttätige Kontrolle der Prozesspläne erfolgt. Der Editor bildet somit ein Kontroll- und Steuermittel, welches die Fehlersicherheit bei der Fertigungsplanung erheblich erhöht.

Besonders vorteilhaft sind die mittels des Editors erstellten Prozesspläne unabhängig von einem bestimmten zu produzierenden Produkt und auch unabhängig von den spezifischen Fertigungs- und Messeinheiten, die zur Herstellung derartiger Produkte verwendet werden.

Die einzelnen Prozesspläne können somit beispielsweise für unterschiedliche Produkte gleicher Technologie eingesetzt werden.

Der Bezug des Prozessplanes zu spezifischen Fertigungs- und Messeinheiten eines Fertigungsbetriebes wird vorzugsweise durch eine Zuordnung von Einzelprozessanweisungen zum jeweiligen Prozessziel im Prozessplan ermöglicht. Die Einzelprozessanweisungen sind dabei jeweils durch einen spezifischen Parametersatz bestimmt, mittels dessen der Bezug zur jeweiligen Fertigungs- und Messeinheit erfolgt und die Fertigungsparameter definiert werden.

Schließlich können den Prozessplänen Produkt-Arbeitspläne zugeordnet sein, über welche der Bezug eines Prozessplanes zu einem spezifischen Produkt erfolgt. Auch die Produkt-Arbeitspläne sind durch Parametersätze bestimmt, wobei diese den Bezug zum jeweiligen Produkt herstellen.

Durch die zwischen den Prozessplänen, den Prozessplanschritten, den Prozesszielen, den Einzelprozessanweisungen und den Produkt-Arbeitsplänen bestehenden Zuordnungen können diese einzelnen Komponenten mehrfach und damit äußerst flexibel im Editor verwendet werden. Insbesondere können Prozessziele und Einzelprozessanweisungen für verschiedene Prozesspläne verwendet werden.

Die Erfindung wird im nachfolgenden anhand der Zeichnungen erläutert. Es zeigen
- Figur 1:: Blockschaltbild eines Ausführungsbeispiels eines Editors zur Erzeugung von Prozessplänen.
- Figur 2:: Blockschaltbild von Elementen zur Erzeugung von Prozessplänen.
- Figur 3:: Erstes Ausführungsbeispiel einer Prozessplanstruktur.
- Figur 4:: Zweites Ausführungsbeispiel einer Prozessplanstruktur.
- Figur 5:: Drittes Ausführungsbeispiel einer Prozessplanstruktur.

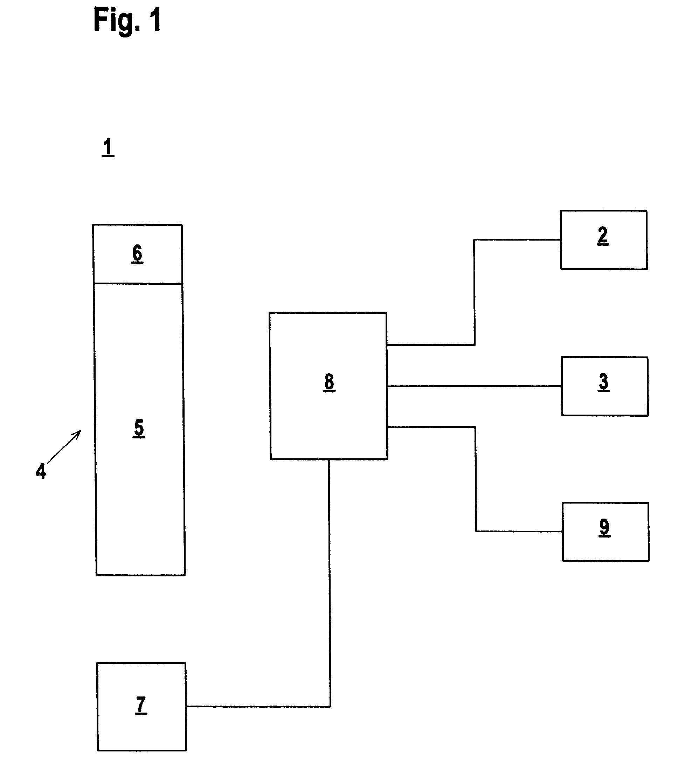

Figur 1 zeigt ein Blockschaltbild eines Ausführungsbeispiels eines Editors 1 zur Erzeugung von Prozessplänen. Derartige Prozesspläne beschreiben den Fertigungsablauf bei der Herstellung von Produkten, wobei es sich bei diesen Fertigungsabläufen um prozessorientierte Produktionsabläufe handelt. Derartige prozessorientierte Produktionsabläufe finden sich beispielsweise in der chemischen oder pharmazeutischen Industrie oder in der Halbleiterindustrie.

Im vorliegenden Ausführungsbeispiel dienen die Prozesspläne zur Bearbeitung von Wafern, beispielsweise zur Herstellung von integrierten Schaltungen wie DRAM's oder dergleichen.

Der Editor 1 ist Bestandteil einer nicht dargestellten Rechnereinheit wie beispielsweise eines Personalcomputers. Mittels dieses Editors 1 können von einem Benutzer durch Kombination einzelner Elemente Prozesspläne erstellt werden. Diese Elemente sind von Prozesszielen gebildet, welche über Prozessplanschritte und/oder Verzweigungen miteinander verknüpft werden.

Der Editor 1 weist erste Speichermittel 2 auf, in welchen eine Anzahl von verschiedenen Prozesszielen in Form einer Bibliothek gespeichert sind.

Weiterhin weist der Editor 1 zweite Speichermittel 3 auf, in welchen Regeln zur Verknüpfung von Prozesszielen über Prozessplanschritte und/oder Verzweigungen gespeichert sind.

Prinzipiell kann anstelle separater Speichermittel 2, 3 auch ein gemeinsames Speichermittel vorgesehen sein. Die Speichermittel 2, 3 können von flüchtigen oder nicht flüchtigen Speichern gebildet sein.

Weiterhin weist der Editor 1 Anzeigemittel auf, die zur Anzeige von Prozessplänen, Prozesszielen, Prozessplanschritten und Verzweigungen dienen. Die Anzeigemittel sind vorzugsweise Bestandteil einer graphischen Oberfläche 4, die an einem nicht dargestellten Terminal der Rechnereinheit dargestellt wird.

Die graphische Oberfläche 4 ist dabei zweckmäßigerweise in unterschiedliche Segmente 5, 6 unterteilt. In einem ersten Segment 5 werden die vom Benutzer über eine Eingabeeinheit 7 eingegebenen Strukturen der Prozesspläne visualisiert. Die Eingabeeinheit 7 ist von einer Tastatur und/oder einer Maus gebildet.

Neben dem ersten Segment 5 weist die graphische Oberfläche 4 ein zweites Segment 6 auf, in welchem dem Benutzer die einzelnen zur Verfügung stehenden Elemente zur Erstellung der Prozesspläne, insbesondere die einzelnen Prozessziele, Prozessplanschritte und Verzweigungen angezeigt werden. Vorzugsweise ist dieses Segment 6 in entsprechende Untersegmente gegliedert, die jeweils zur Anzeige eines Elementtyps dienen.

Die Speichermittel 2, 3, die Anzeigemittel und die Eingabeeinheit 7 sind an eine Steuereinheit 8 angeschlossen, die den Betrieb des Editors 1 steuert. Die Steuereinheit 8 ist beispielsweise von einem Mikroprozessor oder dergleichen gebildet, der in der Rechnereinheit integriert ist.

Zudem sind an die Steuereinheit 8 Überprüfungsmittel 9 angeschlossen, die von einem separaten Mikroprozessor oder dergleichen gebildet sind. Alternativ können die Überprüfungsmittel 9 auch in dem die Steuereinheit 8 bildenden Mikroprozessor integriert sein.

Mittels der Überprüfungsmittel 9 wird ein von einem Benutzer erstellter Prozessplan selbsttätig überprüft. Insbesondere wird geprüft, ob der Prozessplan gemäß den abgespeicherten Regeln erstellt wurden. Desweiteren erfolgt eine Konsistenzüberprüfung des Prozessplans. Dabei wird insbesondere geprüft, ob die einzelnen Prozessziele zu einem vollständigen und ausführbaren Prozessplan verknüpft sind. Schließlich können für die einzelnen Prozessziele vorgegebene Freigabe- und Statusparameter definiert sein, die mit den Prozesszielen abgespeichert sind. Diese Parameter werden von den Überprüfungsmitteln 9 darauf abgeprüft, ob die zugeordneten Prozessziele in einem Prozessplan einsetzbar sind.

In Abhängigkeit der Ergebnisse der Überprüfung wird von den Überprüfungsmitteln 9 ein Signal generiert, welches in die Steuereinheit 8 eingelesen wird. Dieses Signal ist im einfachsten Fall von einem binären Signal gebildet. Bei einer erfolgreichen Überprüfung wird durch Einlesen des Signals in die Steuereinheit 8 eine Freigabemeldung generiert, die eine fehlerfreie Erstellung eines Prozessplans oder eines Teils eines Prozessplans anzeigt. Im Fall einer nicht erfolgreichen Überprüfung erfolgt eine Fehlermeldung und/oder eine Ausgabe eines Sperrsignals, mittels dessen die Freigabe eines Prozessplans verhindert wird.

Im einfachsten Fall erfolgt die Überprüfung nachdem der Benutzer einen kompletten Prozessplan erstellt hat. Alternativ kann dem Benutzer interaktiv während der Erstellung des Prozessplans angezeigt werden, ob die von ihm erstellten Verknüpfungen zulässig sind oder nicht.

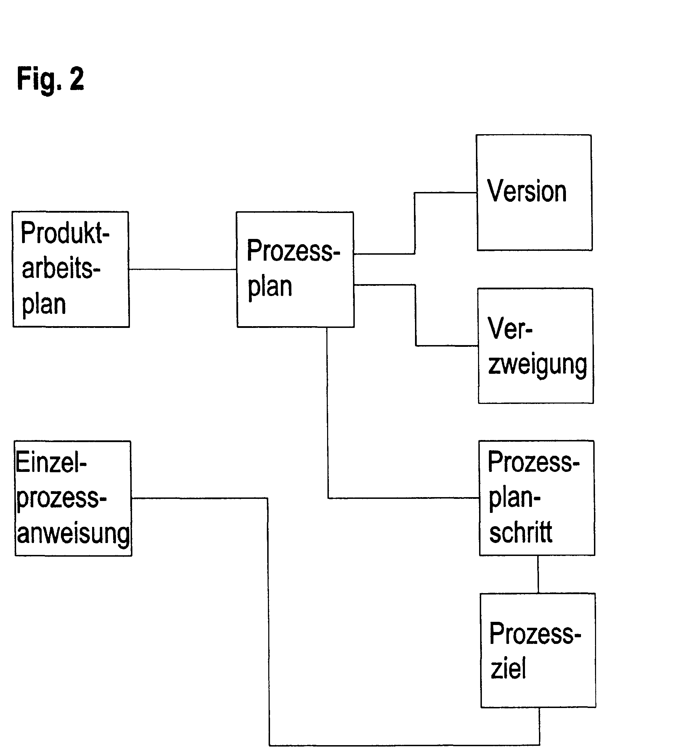

Figur 2 zeigt ein Blockschaltbild mit verschiedenen Elementen zur Erstellung eines Prozessplans. Neben den einzelnen Prozesszielen, Prozessplanschritten und Verzweigungen sind als weitere Elemente auch Einzelprozessanweisungen und Produkt-Arbeitspläne vorgesehen.

Die einzelnen Prozessziele bilden einzelne Fertigungsschritte oder Messschritte, die innerhalb eines Fertigungsablaufs durchzuführen sind.

Bei der Bearbeitung von Wafern sind typische Beispiele für derartige Prozessziele:

Das Aufdampfen einer Schicht auf eine Oberfläche. Als Prozessparameter können hierbei beispielsweise die Schichtdicke, die Materialbeschaffenheit der Schicht sowie physikalische Randparameter während des Aufdampfens definiert werden. Diese Prozessparameter bilden einen Parametersatz zur Charakterisierung des Prozessziels.

Bei einem Ätzprozess kann als Prozessziel das Abätzen einer bestimmten Schichtdicke definiert werden.

Bei einem Messprozess kann das Prozessziel durch eine Vorgabe der Messung einer Schichtdicke bestimmt sein.

Die einzelnen Prozessziele werden insbesondere über Prozessplanschritte verbunden. Dadurch entsteht insbesondere eine zeitliche Abfolge der Bearbeitung der einzelnen Prozessziele.

Die Prozessplanschritte bilden somit logistische Elemente, die insbesondere den Materialfluss während eines Fertigungsablaufs definieren.

Über einen Prozessplanschritt werden innerhalb eines Frozessplans jeweils zwei Prozessschritte miteinander verbunden. Ein aus Prozesszielen und Prozessplanschritten aufgebauter Prozessplan führt somit zu einer linearen Gliederung von Prozesszielen, welche sequentiell abgearbeitet werden.

Alternativ oder zusätzlich können innerhalb eines Prozessplans mehrere Prozessziele über Verzweigungen verknüpft sein. Über eine Verzweigung ist ein Prozessziel nicht nur mit einem sondern wenigstens zwei weiteren Prozesszielen verknüpft. Alternativ kann eine Verzweigung auf eine weitere Verzweigung führen, so dass dadurch ein geschachtelter Aufbau mehrerer Verzweigungen entsteht.

Die einzelnen Verzweigungen können Bedingungen enthalten, in Abhängigkeit derer bei der Abarbeitung der einzelnen Prozessziele wenigstens ein Ast der Verzweigung auswählbar ist.

In einer vorteilhaften Ausführungsform können über Prozessplanschritte oder Verzweigungen innerhalb eines Prozessplans weitere Prozesspläne aufgerufen werden. Somit kann ein Prozessplan neben einer Anzahl von Prozesszielen auch aus einer Anzahl von weiteren Prozessplänen aufgebaut sein.

Ein aus einzelnen Prozesszielen, Prozessplanschritten, Verzweigungen und gegebenenfalls weiteren Prozessplänen aufgebauter Prozessplan definiert einen Fertigungsablauf, der unabhängig von der Verwendung bestimmter Fertigungs- oder Messeinheiten und unabhängig von einem bestimmten Produkt ist. Somit ist der Prozessplan für unterschiedliche Produkte gleicher Technologie einsetzbar.

Bei dem vorliegenden Ausführungsbeispiel dienen die Prozesspläne zur Beschreibung von Fertigungsabläufen bei der Bearbeitung von Wafern. Ein anlagen- und produktunabhängiger Prozessplan kann dabei die Bearbeitung von Wafern gleicher Technologie oder unterschiedlicher Typen umfassen. So kann mit einem Prozessplan die Bearbeitung sowohl von Testwafern als auch verschiedenen kundenspezifischen Wafern beschrieben werden. Weiterhin definiert ein derartiger Prozessplan den Fertigungsablauf unabhängig von dem Fertigungsbetrieb.

Wie aus Figur 2 ersichtlich ist, können den Prozesszielen Einzelprozessanweisungen zugeordnet sein. Die Einzelprozessanweisungen sind durch einen Parametersatz bestimmt, der spezifisch für eine Anlage, nämlich eine Fertigungs- oder Messeinheit ist.

Vorzugsweise erfolgt eine Zuordnung einer oder mehrerer Einzelprozessanweisungen zu einem Prozessziel unabhängig von der Verwendung eines Prozesszieles in Prozessplänen. Damit wird festgelegt, auf welchen Fertigungs- oder Messeinheiten das jeweilige Prozessziel erreicht werden kann.

Besteht das Prozessziel beispielsweise in dem Aufbringen einer Schicht auf der Oberfläche eines Substrats, so wird durch Zuordnung der Einzelprozessanweisung zu dem Prozessziel der Typ der Fertigungseinheit festgelegt, mit welchem das Aufbringen der Schicht erfolgt. Weiter werden vorzugsweise die typischen Anlagenparameter der Fertigungsanlage definiert, die zur Erreichung des Prozessziels notwendig sind.

Durch die Zuordnung einer Einzelprozessanweisung zu einem Prozessziel ist somit der Typ und die Beschaffenheit der Fertigungs- oder Messeinheit festgelegt, mit welcher das Prozessziel erreicht werden soll.

Dabei sind die Prozessziele und die daraus zusammengesetzten Prozesspläne noch immer unabhängig vom spezifischen Produkt, welches mit dem Prozessplan hergestellt wird. Eine Festlegung auf einen bestimmten Produkttyp erfolgt erst durch Zuordnung von Produkt-Arbeitsplänen zu den Prozessplänen. Diese Produkt-Arbeitspläne entstehen durch Zuordnung produktspezifischer Parametersätze zu den jeweiligen Prozessplänen.

Beispielsweise werden durch diese Parametersätze als Produkte Testwafer oder kundenspezifische Wafer definiert. Je nach Ausbildung dieser Parametersätze erfolgt durch die Zuordnung eine Festlegung, ob mit einem Prozessplan Testwafer oder bestimmte kundenspezifische Wafer bearbeitet werden.

Schließlich sind dem Projektplan Versionsnummern zugeordnet. Dies ist in Figur 2 mit "Version" gekennzeichnet. Über diese Versionsnummern kann durch die Überprüfungsmittel 9 eine Versionsverwaltung durchgeführt werden, wobei insbesondere die Abfolge von Änderungen der Prozesspläne erfasst wird.

Zweckmäßigerweise sind dabei den einzelnen Elementen, insbesondere den Projektzielen, Einzelprozessanweisungen und Produkt-Arbeitsplänen Statusparameter zugeordnet, die jeweils eine Versionsnummer und gegebenenfalls weitere Informationen über Art und Umfang der Änderungen des jeweiligen Elements enthalten. Zudem sind diesen Elementen Freigabeparameter zugeordnet, aufgrund derer durch die Überprüfungsmittel 9 überprüfbar ist, ob die einzelnen Elemente zur Erstellung von Prozessplänen herangezogen werden dürfen.

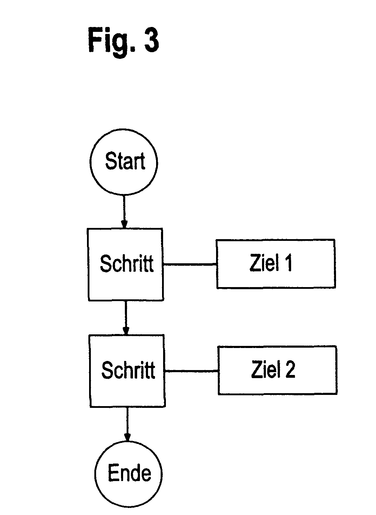

In den Figuren 3 - 5 sind unterschiedliche Beispiele von Prozessplänen dargestellt. Jeder Prozessplan beginnt dabei mit einem Start-Element und endet mit einem Ende-Element, welche spezielle Ausbildungen von Prozessplanschritten darstellen.

In Figur 3 ist eine lineare Struktur eines Prozessplans dargestellt. Dieser Prozessplan enthält lediglich zwei hintereinander angeordnete Prozessplanschritte (Schritt), welche jeweils auf ein abzuarbeitendes Prozessziel Ziel 1, Ziel 2 führen.

Durch die Prozessplanschritte wird die zeitliche Abfolge der Prozessziele festgelegt.

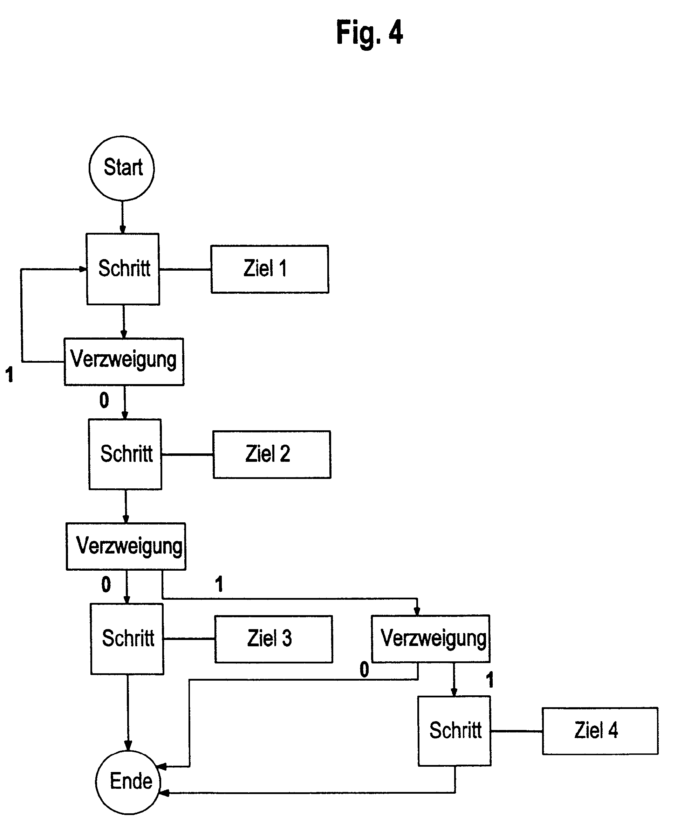

Figur 4 zeigt ein Ausführungsbeispiel eines Prozessplans mit mehreren Prozessplanschritten und Verzweigungen. Zunächst führt ein erster Prozessplanschritt zu einem ersten Prozessziel, Ziel 1.

An den ersten Prozessplanschritt schließt eine erste Verzweigung an, in welcher eine Bedingung hinterlegt ist. Bei Nichterfüllen der Bedingung wird eine logische Variable, wie in Figur 4 dargestellt, auf den Wert 1 gesetzt, so dass ein Rücksprung zu dem ersten Prozessplanschritt erfolgt, worauf das Prozessziel, Ziel 1, nochmals abgearbeitet wird. Bei Erfüllen der Bedingung wird in der Verzweigung die logische Variable auf den Wert 0 gesetzt, so dass über einen nachgeordneten Prozessplanschritt die Abarbeitung des zweiten Prozessziels, Ziel 2, erfolgt.

Dem zweiten Prozessplanschritt ist eine zweite Verzweigung nachgeordnet, in welcher ebenfalls eine Bedingung hinterlegt ist. Bei Erfüllen der Bedingung wird eine logische Variable auf den Wert 0 gesetzt, so dass in einem Ast des Prozessplans über einen weiteren Prozessplanschritt das Prozessziel, Ziel 3, abgearbeitet wird, worauf das Ende des Prozessplans erreicht wird.

Bei Nichterfüllen der Bedingung wird in einem weiteren Ast des Prozessplans eine weitere Verzweigung erreicht, in welcher wiederum eine Bedingung hinterlegt ist. Bei Erfüllen der Bedingung wird das Ende des Prozessplans erreicht, während bei Nichterfüllen der Bedingung über einen weiteren Prozessplanschritt ein weiteres Prozessziel, Ziel 4, abgearbeitet wird, bevor das Ende des Prozessplans erreicht wird.

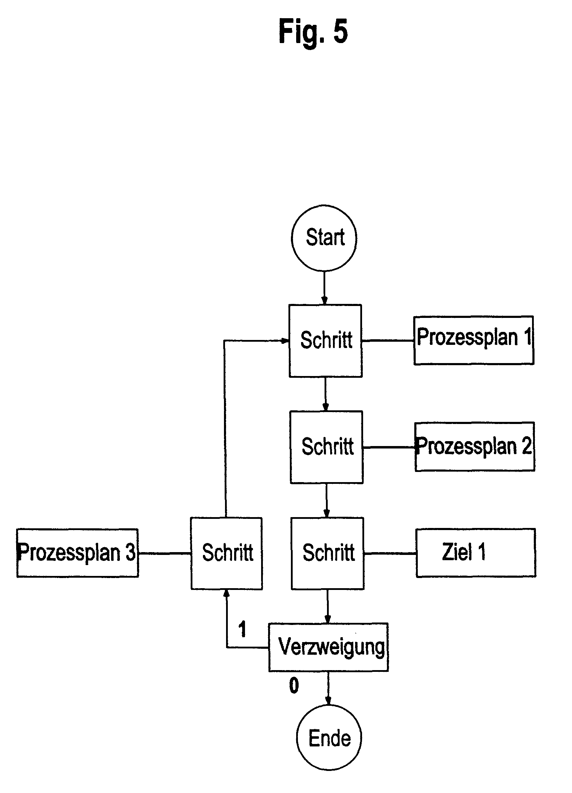

Bei dem in Figur 5 dargestellten Prozessplan werden nach dem Start des Prozessplans drei Prozessplanschritte hintereinander durchlaufen. Über den ersten und zweiten Prozessplanschritt werden jeweils weitere Prozesspläne 1 und 2 abgearbeitet, während über den dritten Prozessplanschritt ein Prozessziel, Ziel 1, abgearbeitet wird.

Dem dritten Prozessplanschritt ist eine Verzweigung nachgeordnet. Bei Erfüllen der Bedingung wird das Ende des Prozessplans erreicht, während bei Nichterfüllen der Bedingung über einen weiteren Prozessplanschritt die Abarbeitung eines weiteren Prozessplans 3 erfolgt und dann ein Rücksprung zum ersten Prozessplanschritt erfolgt, worauf von neuem der Prozessplan 1 abgearbeitet wird.

## Patentansprüche

1. Editor (1) zur Erstellung von Prozessplänen mit Speichermitteln (2) zum Speichern von verschiedenen Prozesszielen, mit Speichermitteln (3) zum Speichern von Regeln zur Bildung von Prozessplänen durch Verknüpfung von Prozesszielen über Prozessplanschritte und/oder Verzweigungen, mit Anzeigemitteln zur Anzeige von Prozesszielen, Prozessplanschritten, Verzweigungen und Prozessplänen und mit Überprüfungsmitteln (9) zur Überprüfung von Prozessplänen, wobei in Abhängigkeit der Überprüfung eine Freigabemeldung aktivierbar ist.

2. Editor nach Anspruch 1, **dadurch gekennzeichnet**, dass durch die Verknüpfung von Prozesszielen über Prozessplanschritte und/oder Verzweigungen die Reihenfolge der Bearbeitung von Prozesszielen vorgegeben ist.

3. Editor nach einem der Ansprüche 1 oder 2, **dadurch gekennzeichnet**, dass über Prozessplanschritte und/oder Verzweigungen mehrere Prozesspläne verknüpft sind.

4. Editor nach einem der Ansprüche 1 - 3, **dadurch gekennzeichnet**, dass jeder Prozessplanschritt jeweils nur auf ein Prozessziel oder einen Prozessplan führt.

5. Editor nach einem der Ansprüche 1 - 4, **dadurch gekennzeichnet**, dass jede Verzweigung auf Prozessplanschritte und/oder weitere Verzweigungen geführt sind.

6. Editor nach Anspruch 5, **dadurch gekennzeichnet**, dass die Verzweigungen Bedingungen enthalten, in Abhängigkeit derer wenigstens ein Ast der Verzweigung auswählbar ist.

7. Editor nach einem der Ansprüche 1 - 6, **dadurch gekennzeichnet**, dass die Prozessziele Fertigungsschritte oder Messschritte eines Fertigungsprozesses bilden.

8. Editor nach einem der Ansprüche 1 - 7, **dadurch gekennzeichnet**, dass die Prozessziele jeweils durch einen Parametersatz gekennzeichnet sind.

9. Editor nach Anspruch 8, **dadurch gekennzeichnet**, dass die Parametersätze der Prozessziele produktunabhängig und anlagenunabhängig sind.

10. Editor nach einem der Ansprüche 7 - 9, **dadurch-gekennzeichnet**, dass einem Prozessziel in einem freigegebenen Prozessplan wenigstens eine Einzelprozessanweisung zugeordnet ist.

11. Editor nach Anspruch 10, **dadurch gekennzeichnet**, dass jede Einzelprozessanweisung durch einen Parametersatz bestimmt ist, der spezifisch für eine Anlage ist, auf welcher der das zugehörige Prozessziel bildende Mess- oder Fertigungsschritt durchgeführt wird.

12. Editor nach einem der Ansprüche 10 oder 11, **dadurch gekennzeichnet**, dass einem Prozessplan ein Produkt-Arbeitsplan zugeordnet ist, wodurch dem Prozessplan ein Parametersatz zugeordnet ist, welcher spezifisch für das herzustellende Produkt ist.

13. Editor nach einem der Ansprüche 8 - 12, **dadurch gekennzeichnet**, dass die Prozesspläne auf unterschiedliche Produkte gleicher Technologie anwendbar sind.

14. Editor nach Anspruch 13, **dadurch gekennzeichnet**, dass die unterschiedlichen Produkte gleicher Technologie von unterschiedlichen kundenspezifischen Produkten, von Testprodukten und/oder betriebsinternen Produkten gebildet sind.

15. Editor nach einem der Ansprüche 1 - 14, **dadurch gekennzeichnet**, dass die einzelnen Prozessziele Freigabe- und Statusparameter aufweisen, die von den Überprüfungsmitteln (9) überprüfbar sind.

16. Editor nach einem der Ansprüche 10 - 15, **dadurch gekennzeichnet**, dass die einzelnen Einzelprozessanweisungen und Produkt-Arbeitspläne Freigabe- und Statusparameter aufweisen, die von den Überprüfungsmitteln (9) überprüfbar sind.

17. Editor nach einem der Ansprüche 1 - 16, **dadurch gekennzeichnet**, dass zur Verknüpfung von Prozesszielen, Prozessplanschritten und Verzweigungen Regeln vorgegeben sind, deren Einhaltung mittels der Überprüfungsmittel (9) überwacht wird.

18. Editor nach einem der Ansprüche 1 - 17, **dadurch gekennzeichnet**, dass mittels der Überprüfungsmittel (9) Konsistenzüberprüfungen bei einem Prozessplan durchgeführt werden.

19. Editor nach einem der Ansprüche 1 - 18, **dadurch gekennzeichnet**, dass die Anzeigemittel eine graphische Oberfläche (4) einer Rechnereinheit umfassen.

20. Editor nach Anspruch 19, **dadurch gekennzeichnet**, dass ein von einem Benutzer erstellter Prozessplan mittels der graphischen Oberfläche (4) visualisierbar ist.

21. Editor nach Anspruch 20, **dadurch gekennzeichnet**, dass die zur Erstellung eines Prozessplans verfügbaren Prozessziele und Prozessplanschritte mittels der graphischen Oberfläche (4) visualisierbar sind.

22. Editor nach Anspruch 21, **dadurch gekennzeichnet**, dass aus den verfügbaren Prozesszielen und Prozessplanschritten nur die über die Überprüfungsmittel (9) freigegebenen Prozessziele und Prozessplanschritte zur Erstellung des Prozessplans auswählbar sind.

23. Editor nach einem der Ansprüche 1 - 22, **dadurch gekennzeichnet**, dass die mit diesem erstellten Prozesspläne zur Herstellung von Halbleiterprodukten, chemischen Produkten oder pharmazeutischen Produkten verwendet werden.

24. Editor nach Anspruch 23, **dadurch gekennzeichnet**,dass die Prozesspläne zur Bearbeitung von Wafern verwendet werden.
